# EUROPEAN PATENT APPLICATION

(11) **EP 4 545 914 A1**
(43) Date of publication of application: **30.04.2025**
(21) Application number: 24208008.3
(22) Date of filing: 22.10.2024
(51) Int. Cl.: G01F 1/58

(54) **ELECTROMAGNETIC FLOW METER**

(30) Priority: 26.10.2023 JP 2023183969
(71) Applicant: Yokogawa Electric Corporation, Tokyo 180-8750 (JP)
(72) Inventor: UEHARA, Akira, Musashino-shi, Tokyo, 180-8750, (JP); MATSUO, Yuutarou, Musashino-shi, Tokyo, 180-8750, (JP); KAWANABE, Masato, Musashino-shi, Tokyo, 180-8750, (JP); ISHIHARA, Kengo, Musashino-shi, Tokyo, 180-8750, (JP); HAYASHI, Yuichi, Musashino-shi, Tokyo, 180-8750, (JP)
(74) Representative: Winter, Brandl - Partnerschaft mbB

(57) **Abstract**

An electromagnetic flow meter (10) includes an excitation coil (3) that is arranged in a measuring tube (1), and that generates a magnetic field in a direction perpendicular to a tube axis of the measuring tube (1), a return magnetic path (6) that is arranged on a side surface in a circumferential direction of a tube axis including the excitation coil (3) in the measuring tube (1), and that concentrates the magnetic field generated by the excitation coil (3) to an inside of the measuring tube (1), and a return magnetic-path auxiliary member that is arranged on at least one of an outer diameter side and an inner diameter side in the direction perpendicular to the tube axis of the excitation coil (3), and that complements a function of the return magnetic path (6).

## Description

### FIELD

The present invention relates to an electromagnetic flow meter.

### BACKGROUND

An electromagnetic flow meter has been used as a measurement device used to measure a flow rate of a conductive fluid, such as tap water, flowing through a measurement tube (for example, JP-A-2005-172645, JP-A-9-145435, and JP-A-5-256674).

However, it is difficult to improve the measurement accuracy of the electromagnetic flow meter. For example, in a method in which a part of a position away from a excitation coil is shielded, a gap between a return magnetic path and a magnetic shield becomes large, making it difficult to efficiently suppress magnetic flux leakage from the excitation coil to a piping in which the electromagnetic flow meter is installed (hereinafter referred to as "counterpart piping").

The present invention has been achieved in view of the above problem, and aims to improve the measurement accuracy of the electromagnetic flow meter.

### SUMMARY

According to an aspect of the embodiments, an electromagnetic flow meter that measures a flow rate of a conductive fluid flowing through a measuring tube, includes an excitation coil that is arranged in the measuring tube, and that generates a magnetic field in a direction perpendicular to a tube axis of the measuring tube, a return magnetic path that is arranged on a side surface in a circumferential direction of a tube axis including the excitation coil in the measuring tube, and that concentrates the magnetic field generated by the excitation coil to an inside of the measuring tube, and a return magnetic-path auxiliary member that is arranged on at least one of an outer diameter side and an inner diameter side in the direction perpendicular to the tube axis of the excitation coil, and that complements a function of the return magnetic path.

### BRIEF DESCRIPTION OF THE DRAWINGS

FIG. 1 is a diagram illustrating an example of a cross-section in a direction perpendicular to a tube axis of an electromagnetic flow meter according to an embodiment;
FIG. 2 is a diagram illustrating an example of a cross-section in a direction parallel to the tube axis of the electromagnetic flow meter according to an embodiment;
FIG. 3 is a diagram illustrating a specific example 1 of an external view of the electromagnetic flow meter according to an embodiment;
FIG. 4 is a diagram illustrating a specific example 2 of the external view of the electromagnetic flow meter according to an embodiment;
FIG. 5 is a diagram illustrating a specific example of the external view of a return magnetic-path cover of the electromagnetic flow meter according to an embodiment;
FIG. 6 is a diagram illustrating specific example 1 of the external view of a return magnetic-path sheet of the electromagnetic flow meter according to an embodiment;
FIG. 7 is a diagram illustrating specific example 2 of the external view of a return magnetic-path sheet of the electromagnetic flow meter according to an embodiment; and
FIG. 8 is a diagram illustrating specific example 3 of the external view of a return magnetic-path sheet of the electromagnetic flow meter according to an embodiment.

### DETAILED DESCRIPTION OF THE PREFERRED EMBODIMENTS

Hereinafter, an electromagnetic flow meter according to an embodiment of the present invention will be explained in detail with reference to the drawings. The present invention is not limited to the embodiment explained below.

### Embodiment

Hereinafter, an overview of an electromagnetic flow meter 10, a configuration and a function of the electromagnetic flow meter 10 according to an embodiment will be sequentially explained, and an effect of the embodiment will be explained finally.

### 1. Overview of Electromagnetic Flow meter 10

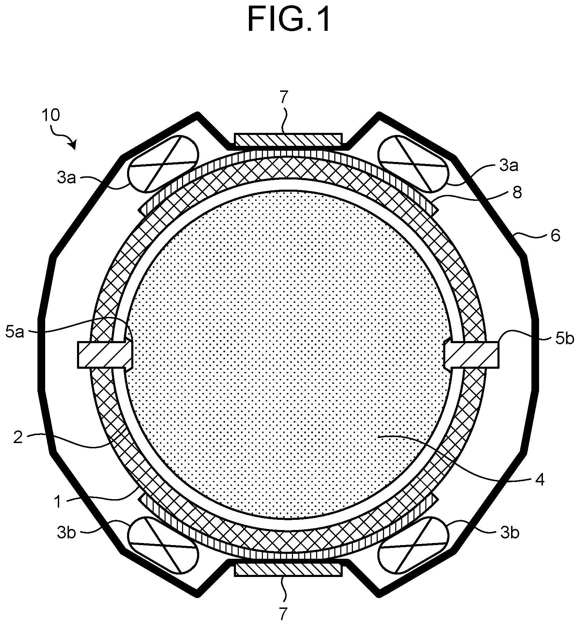

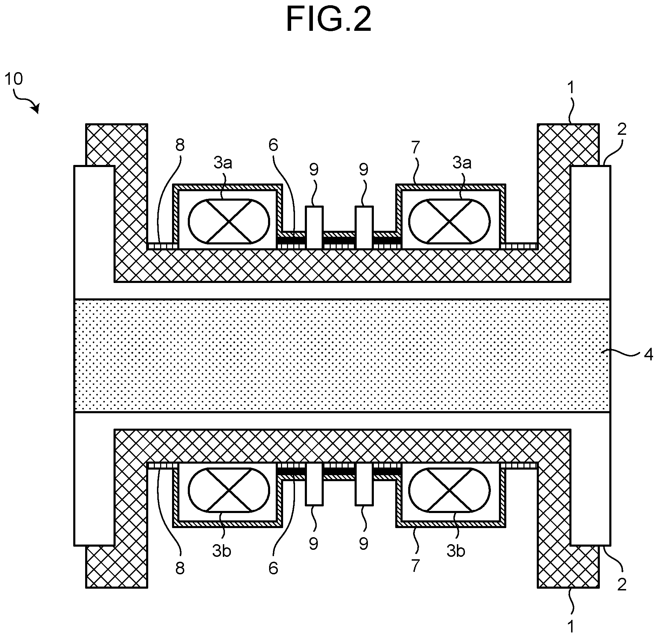

The overview of the electromagnetic flow meter 10 according to the embodiment will be explained using FIG. 1 and FIG. 2. FIG. 1 is a diagram illustrating an example of a cross-section in a direction perpendicular to a tube axis of the electromagnetic flow meter 10 according to the embodiment. FIG. 2 is a diagram illustrating an example of a cross-section in a direction parallel to the tube axis of the electromagnetic flow meter 10 according to the embodiment. In the following, a basic configuration example of the electromagnetic flow meter 10 and an effect of the electromagnetic flow meter 10 will be explained.

### 1-1. Basic Configuration Example of Electromagnetic Flow meter 10

As illustrated in FIG. 1 and FIG. 2, the electromagnetic flow meter 10 includes a measuring tube 1, a lining material 2, an excitation coil 3, an electrode 5, a return magnetic path 6, a return magnetic-path cover 7, a return magnetic-path sheet 8, and a fixing member 9. Moreover, the electromagnetic flow meter 10 measures the flow rate of a conductive fluid 4 flowing inside the measuring tube 1.

### 1-1-1. Basic Configuration of Electromagnetic Flow meter 10

The electromagnetic flow meter 10 is a measuring device used to measure a flow rate of a conductive fluid 4 such as tap water. The measuring tube 1 is made of a non-magnetic metal with corrosion resistance, such as austenitic stainless steel. The lining material 2 is an insulator that covers an inner tube surface of the measuring tube 1. A pair of the excitation coils 3 (3a, 3b) are arranged at a position perpendicular to a tube axis, which corresponds to an upper portion and a bottom portion of the measuring tube 1, and generate a magnetic field inside the measuring tube 1. Moreover, a pair of the electrodes 5 (5a, 5b) are arranged at a position in a direction perpendicular to the tube axis of the measuring tube 1 and perpendicular to the arrangement position of the excitation coils 3. When a flow velocity occurs in the conductive fluid 4 inside the measuring tube 1 due to Faraday's law of electromagnetic induction, an electromotive force is generated in the direction perpendicular to the magnetic field generated by the excitation coil 3 and in the direction perpendicular to the tube axis. The electromagnetic flow meter 10 detects the generated electromotive force with the electrodes 5 (5a, 5b), and converts it to a flow rate of the conductive fluid 4.

### 1-1-2. Return Magnetic-Path Auxiliary Member of Electromagnetic Flow meter 10

The return magnetic path 6 has a function of concentrating the magnetic field generated by the excitation coil 3 to the inside of the measuring tube 1 including the electrodes 5, and is constituted of a ferromagnetic material such as silicon steel plate. The electromagnetic flow meter 10 includes at least one of the return magnetic-path cover 7 and the return magnetic-path sheet 8 as a return magnetic-path auxiliary member that complements the properties of the return magnetic path 6.

The return magnetic-path cover 7 has a first function as a magnetic shield that confines the magnetic field generated by the excitation coil, and a second function of reinforcing the magnetic field in a central portion of the excitation coil 3 as an electromagnet. The return magnetic-path cover 7 is arranged to cover the excitation coils 3 and a side surface in a circumferential direction of the tube axis of the return magnetic path 6. Moreover, particularly as illustrated in FIG. 2, it has a shape entering inside (inwardly extending into) a gap of the excitation coil 3.

The return magnetic-path cover 7 has a first function of shielding such that the magnetic field generated by the excitation coil 3 is not to leak outside, arranged on a side surface in a circumferential direction of a tube axis. Moreover, the return magnetic-path cover 7 has a second function of reinforcing the magnetic field generated by the excitation coil 3 as an electromagnet with its shape extending inwardly to the inside of the gap of the excitation coil 3. In this case, the return magnetic-path cover 7 is fixed to overlap with the return magnetic path 6 in the direction perpendicular to the tube axis inside the gap of the excitation coil 3 by a fixing member 9, and the magnetic field is further reinforced as an electromagnet by increasing the volume of the ferromagnetic material inside the gap of the excitation coil 3.

If the return magnetic-path cover 7 is to be manufactured as a component integrated with the return magnetic path 6, extensive bending process is necessary, making it technically difficult and increasing the manufacturing cost significantly. Moreover, in the excitation coil 3, as a plate thickness inside the gap of the excitation coil 3 increases, the effect as the electromagnet increases to reinforce the magnetic field. However, an external portion of the excitation coil 3 does not require such a thick plate as a magnetic shield, and it becomes an unnecessary use of material. On the other hand, by separating the return magnetic path 6 and the return magnetic-path cover 7 into two parts, it is possible to design it to be thick (double layer) inside the gap of the excitation coil 3 at which the two parts overlap with each other, and to be thin (single layer), on the other hand, because there are no overlapping parts on the outside of the excitation coil 3. Accordingly, it is possible to form the high-performance return magnetic path 6 at a relatively low material cost.

The return magnetic-path sheet 8 has a first function of absorbing the magnetic field generated by the excitation coil, and a second function of reinforcing the magnetic field of a central portion of the excitation coil 3 as an electromagnet. The return magnetic-path sheet 8 has a slit that is cut avoiding portions directly beneath the excitation coil 3, and has a shape to cover the inner portion of the gap on a bottom surface (grounding surface) of the excitation coil 3 and peripheral portions on the bottom surface of the excitation coil 3.

The return magnetic-path sheet 8 prevents the magnetic field generated by the excitation coil 3 from being drawn toward the counterpart piping by being arranged at the peripheral portions on the bottom surface of the excitation coil 3. In this case, the return magnetic-path sheet 8 exerts the first function of absorbing the magnetic flux of the magnetic field generated by the excitation coil 3. Moreover, the return magnetic-path sheet 8 exerts the second function of reinforcing the magnetic field generated by the excitation coil 3 as an electromagnet by being arranged inside the gap on the bottom surface of the excitation coil 3.

Moreover, because the return magnetic-path sheet 8 has the slit so as to avoid the portion directly beneath the excitation coil 3, it does not interfere a flow of the magnetic field generated by the excitation coil 3 to a flow path of the measuring tube 1. The return magnetic-path sheet 8 is only required to have a hollow directly beneath the bottom surface of the excitation coil 3, and to fill other portions, which are the inside of the gap on the bottom surface of the excitation coil 3 and the peripheral portion on the bottom surface of the excitation coil 3, with ferromagnetic material.

### 1-2. Effect of Electromagnetic Flow meter 10

In the following, after explaining an overview and a problem of a reference technique, an effect of the electromagnetic flow meter 10 will be explained.

### 1-2-1. Overview of Reference Technique 1

First, the summary of Reference Technique 1 realizing an inexpensive wafer-type electromagnetic flow meter that reduces leakage magnetic flux and reduces an influence of a material of a counterpart piping will be explained. Reference Technique 1 is a wafer-type electromagnetic flow meter equipped with a mini flange, and is an electromagnetic flow meter including a shielding plate made of magnetic material that is arranged on a flange portion parallel to a plane of the mini flange, and that shields leakage of magnetic flux in a direction of a flow of a measurement fluid from an excitation coil.

### 1-2-2. Overview of Reference Technique 2

Second, an overview of Reference Technique 2 that prevents a measurement error when connecting two ferromagnetic iron pipes to a measuring tube will be explained. Reference Technique 2 is an electromagnetic flow meter that includes a coil serving as a magnetic field generating means generating a magnetic field orthogonal to a flow of a measurement fluid in a measuring tube, at least a pair of electrodes arranged to face each other on a diameter of the measuring tube to measure an electromotive force generated by an action of the magnetic field, and magnetic shielding plates that are arranged to be flanges at both ends of the measuring tube having a small influence to the magnetic field.

### 1-2-3. Overview of Reference Technique 3

Third, an overview of Reference Technique 3 that provides a magnetic circuit having high shielding properties, that prevents leakage of magnetic flux in an axial direction of a measurement tube, and that contributes to reduction of a distance between short sides will be explained. Reference Technique 3 is an electromagnetic flow-rate detector in which a high-permeability magnetic metal ring positioned at an outer end of a measuring tube and a concentric high-permeability side magnetic path are integrated into a single cast structure.

### 1-2-4. Problem of Reference Techniques

First, Related technique 1 and Related technique 2 are techniques in which a portion at a position distant from the excitation coil is shielded. However, a gap between a return magnetic path and a magnetic shield is large, and it is difficult to efficiently suppress leakage of magnetic flux from the excitation coil to a counterpart piping.

Second, in Reference Technique 3, when an iron-based ferromagnetic material is used as a material for the magnetic shield of the electromagnetic flow meter considering cost and the like, the ion-based material cannot be directly exposed to fluids or external environments because it is significantly inferior in corrosion resistance, and strong rust can form as a result of reacting with a lining material, such as Perfluoroalkoxy alkane (PFA), that is injection-molded onto an inner wall of a pipe in the electromagnetic flow meter. On the other hand, in Reference Technique 3, when austenitic stainless steel, which has high corrosion resistance, is used for the detector, and an iron-based material is used as the magnetic shield at a part of the interior of the detector, the same problem as those in Reference Technique 1 and Reference Technique 2 described above arises.

### 1-2-5. Effect

The electromagnetic flow meter 10 according to the embodiment optimizes the structure and the shape of the return magnetic path 6, and at least one of the return magnetic-path cover 7 and the return magnetic-path sheet 8 is equipped as a return magnetic-path auxiliary member that complements the properties of the return magnetic path 6, thereby improving the magnetic shield properties without significant cost increase, and improving the return efficiency of the magnetic flux in a flow path portion. That is, the electromagnetic flow meter 10 can improve the measuring accuracy.

### 2. Configuration and Function of Electromagnetic Flow meter 10

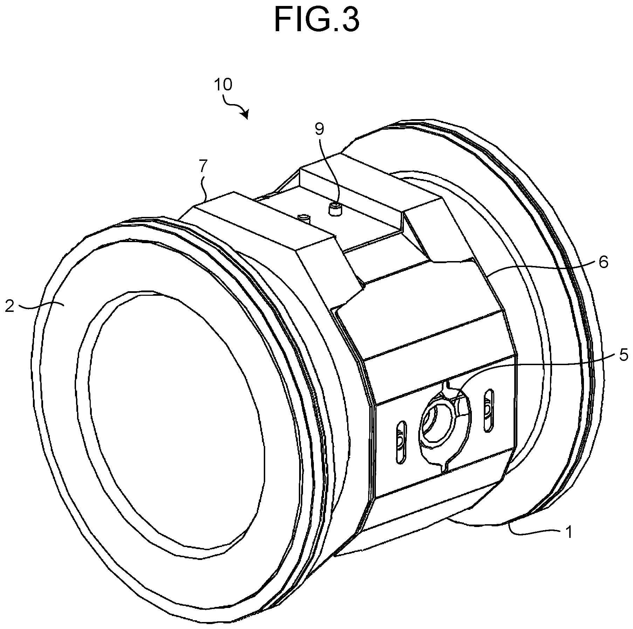

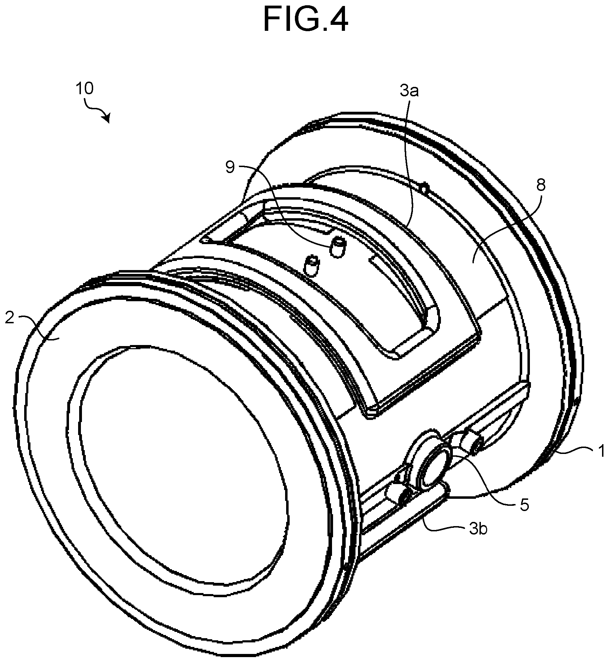

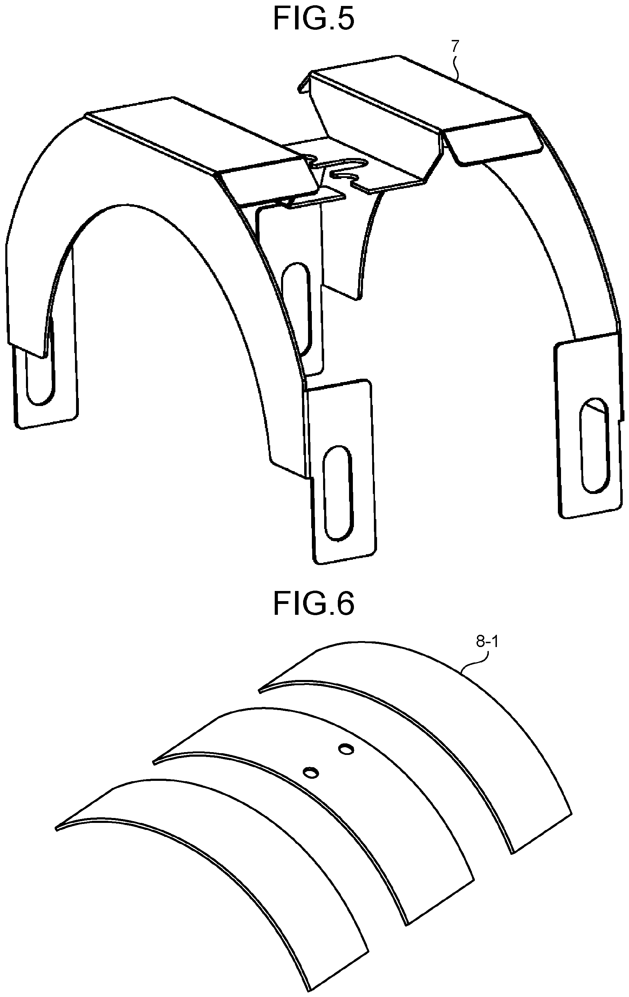

A configuration and a function of the electromagnetic flow meter 10 illustrated in FIG. 1 and FIG. 2 will be explained using FIG. 3 to FIG. 8. The electromagnetic flow meter 10 measures a flow rate of the conductive fluid 4 flowing through the measuring tube 1. FIG. 3 and FIG. 4 are diagrams illustrating a specific example of an external view of the electromagnetic flow meter 10 according to the embodiment. FIG. 5 is a diagram illustrating a specific example an external view of the return magnetic-path cover 7 of the electromagnetic flow meter 10 according to the embodiment. FIG. 6 to FIG. 8 are diagrams illustrating a specific example of an external view of the return magnetic-path sheet 8 of the electromagnetic flow meter 10 according to the embodiment. In the following, the configuration example and the function example of the electromagnetic flow meter 10 will be explained in detail in order of the measuring tube 1, the lining material 2, the excitation coil 3, the electrode 5, the return magnetic path 6, the return magnetic-path cover 7, the return magnetic-path sheet 8, and the fixing member 9.

### 2-1. Configuration Example and Function Example of Measuring tube 1

A configuration example and a function example of the measuring tube 1 will be explained using FIG. 3 and FIG. 4. The measuring tube 1 is arranged in a counterpart pipe in which the conductive fluid 4 to be measured flows, and is a tube in a cylindrical shape forming a flow path of the conductive fluid 4. Moreover, the measuring tube 1 is constituted of a non-magnetic metal having corrosion resistance, such as austenitic stainless steel.

### 2-2. Configuration Example and Function Example of Lining Material 2

A configuration example and a function example of the lining material 2 will be explained using FIG. 3 and FIG. 4. The lining material 2 is an insulating material that covers an inner portion in a tube of the measuring tube 1. For example, the lining material 2 is constituted of an insulating material, such as PFA, that is injection molded onto an inner wall inside the tubular path of the measuring tube 1.

### 2-3. Configuration Example and Function Example of Excitation Coil 3

A configuration example and a function example of the excitation coil 3 will be explained using FIG. 3 and FIG. 4. The excitation coil 3 is arranged in the measuring tube 1, and generates a magnetic field in a direction perpendicular to the tube axis of the measuring tube 1. In this case, the excitation coil 3 is arranged on an outer diameter side in the direction perpendicular to the tube axis of the measuring tube 1 as a pair of the excitation coil 3a and the excitation coil 3b facing each other, and generates a magnetic field in the measuring tube 1 between the pair of the excitation coil 3a and the excitation coil 3b.

### 2-4. Configuration Example and Function Example of Electrode 5

A configuration example and a function example of the electrode 5 will be explained using FIG. 3 and FIG. 4. The electrode 5 is arranged in the measuring tube 1. It is arranged in the perpendicular position to the tube axis of the measuring tube 1 at a position perpendicular to an installation position of the excitation coil 3, and detects an electromotive force generated as the conductive fluid 4 flows inside the measuring tube 1. In this case, the electrode 5 is arranged as a pair of the electrode 5a and the electrode 5b facing each other on the outer diameter side in the direction perpendicular to the tube axis of the measuring tube 1, and detects a signal of an electromotive force that is generated in a direction perpendicular to the tube axis, and that is proportional to a flow rate of the conductive fluid 4 flowing inside the measuring tube 1.

### 2-5. Configuration Example and Function Example of Return Magnetic Path 6

A configuration example and a function example of the return magnetic path 6 will be explained using FIG. 3 and FIG. 4. The return magnetic path 6 is a circuit that applies a magnetic field in a direction perpendicular to the flow path of the conductive fluid 4, and is arranged on a side surface in the circumferential direction of the tube axis including the excitation coil 3 in the measuring tube 1, and concentrates the magnetic field generated by the excitation coil 3 to the inside of the measuring tube 1. The return magnetic path 6 may be arranged on a side surface in the circumferential direction of a tube axis including all of a pair of the excitation coils 3 (3a, 3b) and a pair of the electrodes 5 (5a, 5b) in the measuring tube 1. Moreover, the return magnetic path 6 is a ferromagnetic plate. For example, the return magnetic path 6 is constituted of a silicon steel plate.

### 2-6. Configuration Example and Function Example of Return Magnetic-Path Cover 7

A configuration example and a function example of the return magnetic-path cover 7 will be explained using FIG. 3 to FIG. 5. The return magnetic-path cover 7 is arranged on at least one of an outer diameter side and an inner diameter side in the direction perpendicular to the tube axis of the excitation coil 3, and is one of the return magnetic-path auxiliary members that complements the function of the return magnetic path 6. For example, the return magnetic-path cover 7 is arranged on the outer diameter side in the direction perpendicular to the tube axis of the excitation coil 3, and blocks movement of a magnetic flux toward the outer diameter side. Furthermore, the return magnetic-path cover 7 is arranged to extend inwardly to the gap of the excitation coil 3 on the outer diameter side in the direction perpendicular to the tube axis of the excitation coil 3, to reinforce the magnetic field generated by the excitation coil 3. Moreover, the return magnetic-path cover 7 is a plate of a ferromagnetic material.

A specific example of the return magnetic-path cover 7 will be explained using FIG. 5. As illustrated in FIG. 5, the return magnetic-path cover 7 has a structure extending inwardly to the gap of the excitation coil 3 on the outer diameter side in the direction perpendicular to the tube axis of the excitation coil 3. In the example in FIG. 5, the return magnetic-path cover 7 has a separable structure so as to be arranged to cover either one out of a pair of the excitation coil 3a and the excitation coil 3b. That is, the return magnetic-path cover 7 illustrated in the example in FIG. 5 is arranged to cover both of a pair of the excitation coil 3a and the excitation coil 3b using two sets. Moreover, although the return magnetic-path cover 7 illustrated in FIG. 5 has a separable structure so that installation is easy, it may be structured with a combined single part. The return magnetic-path cover 7 may have a structure to be arranged to cover all of a pair of the excitation coil 3a and the excitation coil 3b with a single part.

As described above, the return magnetic-path cover 7 exerts the first function of blocking the magnetic field generated by the excitation coil 3 to prevent external leakage by being arranged on the side surface in the circumferential direction of a tube axis. Moreover, the return magnetic-path cover 7 exerts the second function of reinforcing the magnetic field generated by the excitation coil 3 as an electromagnet with the shape extending inwardly to the inside of the gap of the excitation coil 3.

### 2-7. Configuration Example and Function Example of Return Magnetic-Path Sheet 8

A configuration example and a function example of the return magnetic-path sheet 8 is will be explained using FIG. 3 to FIG. 8. The return magnetic-path sheet 8 is arranged on at least one of the outer diameter side and the inner diameter side in the direction perpendicular to the tube axis of the excitation coil 3, and is one of the return magnetic-path auxiliary member that complements the function of the return magnetic path 6. For example, the return magnetic-path sheet 8 is arranged on the inner diameter side in the direction perpendicular to the tube axis of the excitation coil 3, and absorbs the magnetic flux of the magnetic field toward the outer diameter side in the direction perpendicular to the tube axis of the excitation coil 3. Moreover, the return magnetic-path sheet 8 is arranged on the inner diameter side in the direction perpendicular to the tube axis of the excitation coil 3 except a position at which the measuring tube 1 is arranged, and passes the magnetic flux of the magnetic field toward the inner diameter side, and reinforces the magnetic field generated by the excitation coil 3. Furthermore, the return magnetic-path sheet 8 is a plate of a ferromagnetic material.

A specific example of the return magnetic-path sheet 8 (8-1, 8-2, 8-3) will be explained using FIG. 6 to FIG. 8. As illustrated in FIG. 6 to FIG. 8, the return magnetic-path sheet 8 has a structure that is arranged on the inner diameter side in the direction perpendicular to the tube axis of the excitation coil 3. In this case, the return magnetic-path sheet 8 is only required to have a structure not obstructing the flow of the magnetic field into the flow path of the measuring tube 1, and to fill other portions, which is the inside of the gap on the bottom surface of the excitation coil 3 and the peripheral portion on the bottom surface of the excitation coil 3, with a ferromagnetic material.

In the example in FIG. 6, the return magnetic-path sheet 8-1 has a structure separated into three parts, to avoid being located directly beneath the excitation coil 3, and to cover the inside of the gap and the peripheral portions on the bottom surface of the excitation coil 3.

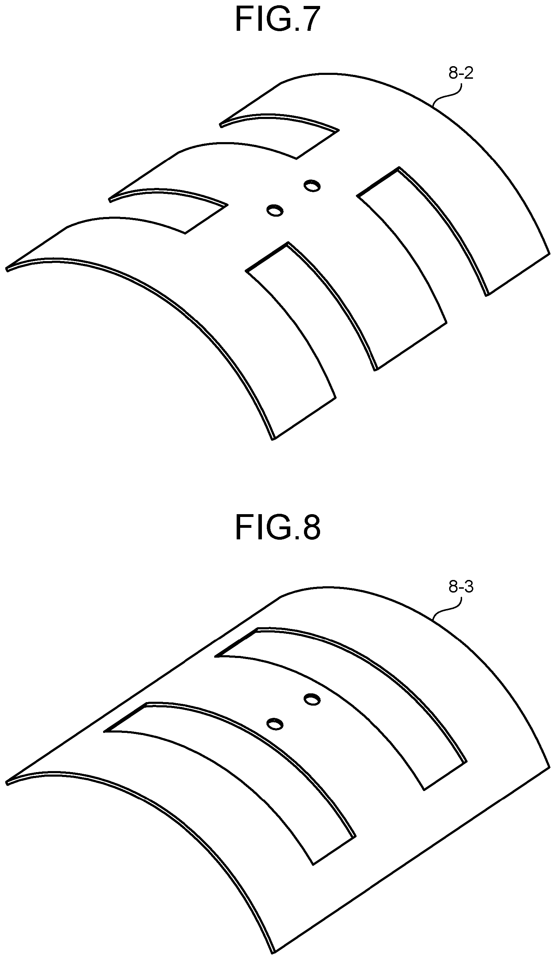

In the example in FIG. 7, the return magnetic-path sheet 8-2 has a structure in which four slits are formed, to avoid being located directly beneath the excitation coil 3, and to cover the inside of the gap and the peripheral portions on the bottom surface of the excitation coil 3.

In the example in FIG. 8, the return magnetic-path sheet 8-3 has a structure in which two hollows are formed, to avoid being located directly beneath the excitation coil 3, and to cover the inside of the gap and the peripheral portions on the bottom surface of the excitation coil 3.

As described above, the return magnetic-path sheet 8 exerts the first function of absorbing the magnetic flux of the magnetic field generated by the excitation coil 3 by being arranged in the peripheral portions on the bottom surface of the excitation coil 3. Moreover, the return magnetic-path sheet 8 exerts the second function of reinforcing the magnetic field generated by the excitation coil 3 as an electromagnet by being arranged in the inside of the gap on the bottom surface of the excitation coil 3.

### 2-8. Configuration Example and Function Example of Fixing Member 9

A configuration example and a function example of the fixing member 9 will be explained using FIG. 3 and FIG. 4. The fixing member 9 fixes the return magnetic path 6, the return magnetic-path cover 7, and the return magnetic-path sheet 8. In the example in FIG. 3 and FIG. 4, the fixing member 9 is constituted of two parts, but the number of parts of the fixing member 9 is not particularly limited.

### 3. Effect of First Embodiment

Finally, an effect of the embodiment will be explained. In the following, effects 1 to 6 corresponding to the configurations and functions according to the embodiment will be explained.

### 3-1. Effect 1

First, in the embodiment described above, the electromagnetic flow meter 10 includes the excitation coil 3 that is arranged in the measuring tube 1, and that generates a magnetic field in the direction perpendicular to the tube axis of the measuring tube 1, a return magnetic path 6 that is arranged on the side surface in the circumferential direction of a tube axis including the excitation coil 3, and that concentrates the magnetic field generated by the excitation coil 3 to the inside of the measuring tube 1, and the return magnetic-path auxiliary member that is arranged at least one of the outer diameter side and the inner diameter side in the direction perpendicular to the tube axis of the excitation coil 3, and that complements the function of the return magnetic path 6. Therefore, according to the embodiment, the measuring accuracy of the electromagnetic flow meter 10 can be improved.

### 3-2. Effect 2

Second, in the embodiment described above, the electromagnetic flow meter 10 has the return magnetic-path cover 7 that is the return magnetic-path auxiliary member arranged on the outer diameter side in the direction perpendicular to the tube axis of the excitation coil 3, to block the movement of the magnetic flux of the magnetic field toward the outer diameter side. Therefore, according to the embodiment, by suppressing leakage of the magnetic flux to the outside with the return magnetic-path cover 7, the measuring accuracy of the electromagnetic flow meter 10 can be improved.

### 3-3. Effect 3

Third, in the embodiment described above, the return magnetic-path cover 7 that is the return magnetic-path auxiliary member is arranged to extend inwardly to the gap of the excitation coil 3, and reinforces the magnetic field generated by excitation coil 3. Therefore, according to the embodiment, by reinforcing the magnetic field in a central portion of the excitation coil 3 with the return magnetic-path cover 7 as an electromagnet, the measuring accuracy of the electromagnetic flow meter 10 can be improved.

### 3-4. Effect 4

Fourth, in the embodiment described above, the electromagnetic flow meter 10 has the return magnetic-path sheet 8 that is the return magnetic-path auxiliary member on the inner diameter side in the direction perpendicular to the tube axis of the excitation coil 3, to absorb the magnetic flux of the magnetic field to the outer diameter side. Therefore, according to the embodiment, by suppressing the leakage of the magnetic flux to the outside with the return magnetic-path sheet 8, the measuring accuracy of the electromagnetic flow meter 10 can be improved.

### 3-5. Effect 5

Fifth, in the embodiment described above, the electromagnetic flow meter 10 has the return magnetic-path sheet 8 that is the return magnetic-path auxiliary member arranged on the inner diameter side except the position at which the excitation coil 3 is arranged in the measuring tube 1, and that passes the magnetic flux of the magnetic field to the inner diameter side, to reinforce the magnetic field generated by excitation coil 3. Therefore, according to the embodiment, by reinforcing the magnetic field of a central portion of the excitation coil 3 with the return magnetic-path sheet 8 as an electromagnet such that the flow of the magnetic field to the flow path of the measuring tube 1 is not interfered, the measuring accuracy of the electromagnetic flow meter 10 can be improved.

### 3-6. Effect 6

Sixth, according to the above embodiment, in the electromagnetic flow meter 10, at least one of the return magnetic-path cover 7 and the return magnetic-path sheet 8, which are the return magnetic-path auxiliary member, is a plate of a ferromagnetic material. Therefore, according to the embodiment, by effectively complementing the function of the return magnetic path 6 with the return magnetic-path auxiliary member, the measuring accuracy of the electromagnetic flow meter 10 can be improved.

### System

The processing procedure, the control procedure, the specific names, and the information including various kinds of data and parameters described in the above documents and the drawings can be arbitrarily changed unless otherwise specified.

Moreover, the respective components of the respective devices illustrated are of functional concept, and it is not necessarily required to be configured physically as illustrated. That is, specific forms of distribution and integration of the respective devices are not limited to the ones illustrated. That is, all or some thereof can be configured to be distributed or integrated functionally or physically in arbitrary units according to various kinds of loads, usage conditions, and the like.

According to the present invention, there is an effect of improving the measurement accuracy of an electromagnetic flow meter.

## Claims

1. An electromagnetic flow meter (10) that measures a flow rate of a conductive fluid flowing through a measuring tube (1), comprising:
an excitation coil (3) that is arranged in the measuring tube (1), and that generates a magnetic field in a direction perpendicular to a tube axis of the measuring tube (1);
a return magnetic path (6) that is arranged on a side surface in a circumferential direction of a tube axis including the excitation coil (3) in the measuring tube (1), and that concentrates the magnetic field generated by the excitation coil (3) to an inside of the measuring tube (1); and
a return magnetic-path auxiliary member that is arranged on at least one of an outer diameter side and an inner diameter side in the direction perpendicular to the tube axis of the excitation coil, and that complements a function of the return magnetic path (6).

2. The electromagnetic flow meter (10) according to claim 1, wherein
the return magnetic-path auxiliary member is arranged on the outer diameter side in the direction perpendicular to the tube axis of the excitation coil (3), and blocks movement of a magnetic flux of the magnetic field to the outer diameter side.

3. The electromagnetic flow meter (10) according to claim 2, wherein
the return magnetic-path auxiliary member is arranged to extend inwardly to a gap of the excitation coil (3), and reinforces the magnetic field generated by the excitation coil (3).

4. The electromagnetic flow meter (10) according to any one of claims 1 to 3, wherein
the return magnetic-path auxiliary member is arranged on the inner diameter side in the direction perpendicular to the tube axis of the excitation coil (3), and absorbs a magnetic flux of the magnetic field toward the outer diameter side.

5. The electromagnetic flow meter (10) according to claim 4, wherein
the return magnetic-path auxiliary member is arranged on the inner diameter side except a position at which the excitation coil (3) is arranged in the measuring tube (1), and passes a magnetic flux of the magnetic field toward the inner diameter side, and reinforces the magnetic field generated by the excitation coil (3).

6. The electromagnetic flow meter (10) according to any one of claims 1 to 5, wherein the return magnetic-path auxiliary member is a plate of a ferromagnetic material.
